# EUROPÄISCHE PATENTANMELDUNG

(11) **EP 1 675 298 A1**
(43) Veröffentlichungstag der Anmeldung: **28.06.2006**
(21) Anmeldenummer: 05027694.8
(22) Anmeldetag: 17.12.2005
(51) Int. Cl.: H04L 9/32, H04Q 7/38

(54) **Verfahren zur Überprüfung der Identität einer ersten Entität gegenüber einer anderen Entität in einem System sowie System zum Durchführen des Verfahrens**

(30) Priorität: 23.12.2004 DE 102004063393
(71) Anmelder: Deutsches Zentrum für Luft- und Raumfahrt e.V., 51147 Köln (DE)
(72) Erfinder: Strang, Thomas, Dr., 82205 Gilching (DE)
(74) Vertreter: von Kirschbaum, Albrecht

(57) **Zusammenfassung**

Bei der Überprüfung der Identität einer ersten Entität, insbesondere eines Nutzers oder Geräts, gegenüber einer anderen Entität in einem System mittels einer im Rahmen eines Authentifikations- oder Signaturverfahrens durchgeführten Authentifizierung durch Wissen als Grundlage für angewandte Algorithmen wird das von der ersten Entität nachzuweisende und von der anderen Entität zu verifizierende Wissen zumindest zum Teil selbst einer ständigen, hochdynamischen und von außen nicht nachvollziehbaren Änderung in Gestalt eines aktuellen geographischen Aufenthaltsorts der ersten Entität unterworfen. Die erste Entität ist somit bei jeder Informationsüberprüfung aufs Neue aufgefordert, den aktuellen geographischen Aufenthaltsort nachzuweisen. Die erste Entität gilt als glaubwürdig authentifiziert, wenn sie nachweisen kann, dass sie Kenntnis dieser nicht allgemein zugänglichen Ortsinformation hat und die andere, verifizierende Entität Kenntnis von dieser Information hat und nach Übermittlung dieser Information überprüfen kann, ob die Informationen identisch sind oder nicht.

Anwendung bei allgemeiner Lizenzierung, Terminalzugängen oder Navigationsempfängern (GPS, Galileo, Mobilfunk).

## Beschreibung

Die vorliegende Erfindung betrifft ein Verfahren zur Überprüfung der Identität einer ersten Entität, insbesondere eines Nutzers oder Geräts, gegenüber einer anderen Entität in einem System mittels einer im Rahmen eines Authentifikations- oder Signaturverfahrens durchgeführten Authentifizierung durch Wissen als Grundlage für angewandte Algorithmen, wonach die erste Entität als glaubwürdig authentifiziert gilt, wenn sie nachweisen kann, dass sie Kenntnis einer nicht allgemein zugänglichen Information hat und die andere, verifizierende Entität Kenntnis von dieser Information hat und nach Übermittlung dieser Information überprüfen kann, ob die Informationen gültig sind oder nicht, wobei das von der ersten Entität nachzuweisende und von der anderen Entität zu verifizierende Wissen zumindest zum Teil selbst einer ständigen, hochdynamischen und von außen nicht nachvollziehbaren Änderung unterworfen ist, so dass die erste Entität bei jeder Informationsüberprüfung aufs Neue aufgefordert ist, das sich ändernde Wissen nachzuweisen.

Ferner betrifft die Erfindung ein System zum Durchführen des Verfahrens.

Authentifikationsverfahren dienen der Identitätsüberprüfung, d.h. einer Überprüfung dahingehend, ob eine Entität, z.B. eine Person oder ein Gerät, in einem System auch die Identität hat, die sie vorgibt zu sein. Im Zusammenhang mit Nachrichtenübertragungssystemen wird diese Identitätsüberprüfung in B. Schneier, "Angewandte Kryptographie", Addison Wesley, 1996, ISBN 3-89319-854-7 folgendermaßen formuliert: "Die Authentifikation soll dem Empfänger einer Nachricht ermöglichen, die Herkunft einer Nachricht zu ermitteln; ein Eindringling sollte sich nicht als andere Person ausgeben können." Häufigster Verwendungszweck von Authentifikationsverfahren ist die Identitätsprüfung eines Benutzers als Zugangs- und Rechtekontrolle für ein System. Authentifikationsverfahren können aber auch als Identitätsprüfung in der umgekehrten Richtung ("Verhandle ich gerade wirklich mit meiner Bank?") bzw. in beiden Richtungen verwendet werden, z.B. mit Protokollen wie INTERLOCK oder SKID3, die in dem vorher angegebenen Buch von B. Schneier erwähnt sind.

Es wird an dieser Stelle darauf hingewiesen, dass sich ein Teil der folgenden Beschreibungen und Erläuterungen auf den ersten Fall als Beispiel beschränkt. Die umgekehrte Richtung der Identitätsprüfung gilt jedoch analog. Wie es bei dieser Thematik allgemein üblich ist, werden alle Protokolle bestimmten Akteuren - insbesondere "Alice" (= Benutzer) und "Bob" (= Host) - zugeordnet, die z.B. auch in dem vorher angegebenen Buch von B. Schneier zu finden sind.

Eine Entität (z.B. Benutzer, "Alice") kann sich gegenüber einer anderen Entität (z.B. Host, "Bob")durch Wissen (z.B. Passwort, Geheimzahl/PIN, ...), Besitz (Personalausweis, Magnetkarte, Chipkarte, ...) oder Eigenschaften (Fingerabdruck wie in DE 199 07 754 A1, Unterschrift, ...) jeweils einzeln oder in Kombination authentifizieren. Bei Authentifikation durch Wissen gilt eine Entität als glaubwürdig authentifiziert, wenn sie nachweisen kann, dass sie Kenntnis einer Information, z.B. eines Passwortes, hat, die nicht allgemein zugänglich ist. Die verifizierende Entität (z.B. Host, "Bob") hat ebenfalls Kenntnis von dieser Information und kann nach Übermittlung der Information überprüfen, ob die zu vergleichenden Informationen identisch sind.

Um die Vertraulichkeitsanforderungen an die das Wissen verifizierende Entität zu erhöhen, wird im allgemeinen eine Variante der Authentifikation mit Einwegfunktionen verwendet. Diese basiert auf der Idee, dass ein Host zur Überprüfung der Zugangsberechtigung zu einem System die Passwörter nicht zu kennen braucht; er muss lediglich gültige Passwörter von ungültigen unterscheiden können. Dies kann durch die Verwendung von Einwegfunktionen (Hash-Funktionen, z.B. MD5 oder SHA) erreicht werden, die sich in eine Richtung relativ leicht berechnen lassen.

Ihre Umkehrung in die entgegengesetzte Richtung ist aber erheblich schwieriger. Statt einer Liste von Passwörtern speichert der Host das Ergebnis der Einwegfunktion, nämlich das sogenannte "Message Digest" (MD) - eine Art Fingerabdruck der Daten - und kennt somit die eigentlichen Passwörter nicht, so dass keine Gefahr besteht, wenn die Passwortliste bei einem Einbruch in den Host gestohlen wird.

Da aus den von "Alice" übermittelten Daten im Message Digest auf Grund der Charakteristik von Einwegfunktionen nicht auf die nur "Alice" bekannte geheime Information zurückgeschlossen werden kann, schützt diese Vorgehensweise in gewissem Maß auch vor Ausspionieren der geheimen Information bei unsicheren Kommunikationskanälen (Angriffe durch Lauscher; "Eve"). Sie schützt aber nicht vor der späteren nochmaligen Verwendung ("playback attack") des abgehörten Message Digest durch "Eve".

Eine Lösung für dieses Problem besteht in einer Verknüpfung des Message Digest mit einem Zeitstempel. Die meisten der bekannten Verfahren hierzu setzen eine vertrauenswürdige dritte Instanz ("Trent") voraus, die einen zuverlässigen Zeitstempeldienst betreibt. In diesem Zusammenhang wird auf US 5 136 646, US 5 136 647 und US 5 373 561 hingewiesen.

So kann z.B. der von Surety ("The Surety Digital Notary Service") in jeder Sonntagsausgabe der "New York Times" veröffentlichte Zeitstempel in Verbindung mit dem Diskreten Logarithmus-Problem (bei y = a^{x} mod p ist die Berechnung von y leicht, wenn a, x und p gegeben sind; die Berechnung von x gilt jedoch als nachweisbar schwer lösbares Problem, auch wenn y, a und p gegeben sind) verwendet werden, um Playback-Angriffe von "Eve" zu erschweren: "Alice" und "Bob" können immer den Zeitstempel t vom letzten Sonntag und den Hash-Wert (Message Digest (MD)) h des Passworts unabhängig voneinander zur Berechnung von y = t^{h} mod p verwenden.

"Alice" kann das von ihr berechnete Ergebnis anschließend an "Bob" übertragen, der das Ergebnis von "Alice" mit seinen eigenen Berechnungen vergleicht. "Eve" kann jedoch selbst bei Abhören von y und Kenntnis von t und p weder h ermitteln, noch einen Playback-Angriff fahren, sobald ein neuer Zeitstempel veröffentlicht wird. Offensichtlich gewinnt dieses Verfahren an Sicherheit, wenn die Zeitstempel mit einer höheren Frequenz als einmal pro Woche generiert werden.

Eine andere Lösung für dieses Problem stellt die Verwendung von geeigneten "Challenge-and-Response"-Protokollen dar, bei denen bei jeder Kommunikationssitzung ein neuer Schlüssel generiert wird, mit dem die geheime Information verschlüsselt wird. Ein in der Praxis häufig verwendetes Protokoll dieser Kategorie ist CHAP (W. Simpson: "PPP Challenge Handshake Authentication Protocol (CHAP)", RFC1994, 1996), welches jedoch einen großen Nachteil hat, wenn, wie in RFC1994 formuliert ist, "Bob" die geheime Information von "Alice" im Klartext kennen muss. Bessere Protokolle dieser Kategorie sind beispielsweise in dem bereits vorher erwähnten Buch von B. Schneier zu finden.

Signaturverfahren sind enge Verwandte der Authentifikationsverfahren. Die Verwandtschaft ist unter anderem schon darin begründet, dass die mit Signaturverfahren erzeugte elektronische Unterschrift bestimmte Eigenschaften wie Fälschungssicherheit, Einmalverwendbarkeit, Unveränderbarkeit und Unwiderrufbarkeit haben soll, zu denen auch die Authentizität der Unterschrift zählt. Dementsprechend kommen auch ähnliche Algorithmen zum Einsatz, die unter anderem sicherstellen, dass der Empfänger eines Dokuments davon ausgehen kann, dass der Unterzeichner und kein anderer ein signiertes Dokument unterschrieben hat.

Das Wissen, dessen Kenntnis eine Entität bei Authentifikation durch Wissen nachweist, kann vor der Verwendung durch die beteiligten Parteien, also "Alice", "Bob" und gegebenenfalls noch andere, im Prinzip frei gewählt werden. Es gibt zwar einige Regeln, die diese Wahlfreiheit einschränken, so z.B. die Verwendung von möglichst kryptischen Passwörtern mit Sonderzeichen und dergleichen, um Wörterbuchangriffe und andere heuristische Angriffe zu erschweren. Auch sorgt die Verwendung von Zeitstempeln oder gar "Challenge-and-Response"-Protokollen dafür, dass zu unterschiedlichen Zeiten auch unterschiedliche Daten von "Alice" an "Bob" geschickt und dort zur Verifikation herangezogen werden können.

Die geheime Information an sich unterliegt jedoch keiner so hohen Dynamik. Ist sie einmal ausspioniert, z.B. durch "über die Schulter schauen" bei der Eingabe eines Passworts, dann schützt keine Hash-Funktion und kein "Challenge-and-Response"-Protokoll mehr vor Missbrauch, was einen Nachteil des Standes der Technik darstellt.

Auf Grund der bereits vorher dargestellten prinzipiellen Verwandtheit zwischen Authentifikations- und Signaturverfahren haben die bisher bekannt gewordenen Signaturverfahren auch einen ähnlichen Nachteil wie die bekannten Authentifikationsverfahren.

Ein weiterer Nachteil der bekannten elektronischen Signaturverfahren ist die Tatsache, dass diese bisher im wesentlichen die Identität der die Unterschrift leistenden Instanz sowie die Zeit der Unterzeichnung eines Dokuments berücksichtigen. Informationen über den geographischen Ort der Unterzeichnung werden jedoch bei den bekannten elektronischen Signaturverfahren nicht berücksichtigt. Tatsächlich ist aber die Information über den Ort der Unterschriftsleistung ein wichtiger Bestandteil von Verträgen und Beurkundungen. So fordert z.B. die geltende Rechtsprechung, dass bestimmte Dokumente nur dann rechtskräftig sind, wenn neben der Unterschrift des Unterzeichners auch der Ort der Unterzeichnung angegeben wird.

Siehe hierzu folgendes Beispiel, welches einen Auszug aus § 2247 BGB (Eigenständiges Testament) darstellt:
(2) Der Erblasser soll in der Erklärung angeben, zu welcher Zeit (Tag, Monat und Jahr) und an welchem Ort er sie niedergeschrieben hat.
(5) Enthält ein ... Testament keine Angabe über die Zeit der Errichtung und ergeben sich hieraus Zweifel über seine Gültigkeit, so ist das Testament nur dann als gültig anzusehen, wenn sich die notwendigen Feststellungen über die Zeit der Errichtung anderweitig treffen lassen. Dasselbe gilt entsprechend für ein Testament, das keine Angabe über den Ort der Errichtung enthält.

Aus US 61 05 133 A ist ein bilaterales System zum Authentifizieren entfernter Sende-/Empfangsstationen unter Benutzung von Stationskennungen und Passwörtern bekannt, die nur einmal beim Verbindungsaufbau benutzt werden. Danach werden Nachrichten unter Verwendung eines Verschlüsselungsschlüssels ausgetauscht, der nach jeder Systemverbindung gewechselt wird. Die Stationskennungen bestehen aus einem sogenannten statischen Geheimnis (static secret) und einem sogenannten dynamischen Geheimnis (dynamic secret), die aber nicht über den Verbindungsweg übertragen werden.

Das statische Geheimnis, das beiden Stationen bekannt ist, ändert sich nur, wenn der laufende Wert absichtlich mit einem neuen Wert überschrieben wird. Das dynamische Geheimnis wird auch von den beiden betroffenen Stationen geteilt. Es ist insofern dynamisch, als jedes Mal, wenn eine bilaterale Authentifizierung der beiden beteiligten Stationen erfolgt, das dynamische Geheimnis geändert wird. Der verwendete Änderungswert ist eine Pseudozufallszahl. Der Wechselwert bildet keinen Teil irgendeiner Zugangsanfrage oder -information, die zwischen den beiden Stationen ausgetauscht wird, und ist daher kein Gegenstand für eine Entdeckung infolge von Informationen, die über den Übertragungsweg übermittelt werden.

Es ist also bekannt, bei einem Authentifizierungssystem eine Dynamisierung des nachzuweisenden Wissens zu nutzen. Allerdings finden bei diesem bekannten Authentifizierungssystem lediglich Pseudozufallszahlen-Generatoren Verwendung, die auf beiden Seiten, ausgehend von einem beiden Parteien bekannten Startwert, bei jedem Verbindungsaufbau einen identisch berechneten nächsten "Zufallswert" (dynamisches Geheimnis; dynamic secret) erzeugen. Mit Kenntnis des verwendeten Pseudozufallszahlen-Generators und des Startwerts ist das dynamische Geheimnis exakt vorhersehbar, da berechenbar.

Aus US 62 89 453 B1 ist ein Verfahren zum sicheren, zertifizierten Messung physikalischer Daten bekannt, die mit kryptographischen Methoden so verarbeitet werden, dass beim Empfang dieser Daten deren Integrität und Authenzität auch bei einem nicht bei der Messung anwesenden Nutzer festgestellt werden kann. Eine physikalische Messgröße wird als authentisch angesehen, wenn sie wirklich auf einen physikalischen Messvorgang zurückführbar ist und nicht manuell eingegeben wurde. Darüber hinaus wird die Gewissheit über die Authenzität einer physikalischen Messung dadurch gestärkt, dass der Messwert mit Hilfe des privaten Schlüssels des messenden Geräts digital unterschrieben wird, unter Umständen nach vorherigem Hinzufügen von Zeit und Ort der Messung. Ein Gerät weist Entstehungsort und -zeit eines Messwertes nach, wobei der Mensch ausdrücklich außen vor bleibt. Beliebige physikalische Parameter oder Ereignisse, z.B. eine Ortsinformation, sollen zu einem Empfänger zur späteren Verifikation übermittelt werden.

US 2002/00 80 968 A1 beschreibt sichere "Location-based Services" in einem GSM-Mobilfunk-Netz.

US 63 70 629 B1 beschreibt ein Zugangsverfahren für einen Nutzer auf gespeicherte Ortsinformationen, bei dem der Zugang durch Vergleichen einer aktuellen geographischen Position und/oder einer aktuellen Zeit mit einem geographischen Gebiet und/oder einem Zeitintervall, innerhalb welchem ein Zugang zu der gespeicherten Information zugelassen ist, kontrolliert wird. Dieses Verfahren, das auf GPS als Quelle von Ortsinformationen zurückgreift, setzt auch voraus, dass der Nutzer die später zu verifizierende Ortsinformation an die Gegenseite überträgt.

Im Aufsatz von Hutton, B.: "Freund oder Feind? Passives Zugangssystem mit Komfortfunktion", Auto & Elektronik, Heft 1/99, Seiten 157 bis 161) ist ein passives Zugangssystem, z.B. zum Öffnen von Kraftfahrzeugtüren aus der Entfernung mittels Codeschlüssel beschrieben, in dem die Vorzüge der Verwendung von Challenge-Response-Protokollen dokumentiert sind.

Es ist somit festzustellen, dass heutige digitale Authentifikations- und Signaturverfahren neben Pseudozufallszahlen und Schlüsseln im wesentlichen Identitäten und Zeitstempel als Grundlage für die diversen Algorithmen berücksichtigen, was vielfach zu unzureichender Sicherheit bei der Authentifikation einer Entität oder einer Unterschrift führt.

Der vorliegenden Erfindung liegt nunmehr die Aufgabe zu Grunde, diese Algorithmen und damit verbunden die Sicherheit von Authentifikations- und Signaturverfahren und -systemen zu verbessern.

Gemäß der vorliegenden Erfindung wird diese Aufgabe bei einem Verfahren der eingangs genannten Art in vorteilhafter Weise dadurch gelöst, dass bei der Authentifikation als sich ständig änderndes Wissen eine Information über den aktuellen geographischen Aufenthaltsort der ersten Entität verwendet wird.

Ein vorteilhaftes System zur Durchführung des Verfahrens nach einem der vorhergehenden Ansprüche zeichnet sich dadurch aus, dass die erste Entität ("Alice") eine Einrichtung zur Eingabe der nicht allgemein zugänglichen Information enthält, die das sich verändernde Wissen in Gestalt des aktuellen geographischen Aufenthaltsortes der ersten Entität ("Alice") umfasst, dass die andere Entität ("Bob") eine Einrichtung zur Erfassung dieser an sie von der ersten Entität übertragenen oder übergebenen Information aufweist und dass die andere Entität außerdem mit einer Validierungseinrichtung zur Verifizierung und zum Vergleichen der mittels der Einrichtung zur Erfassung erfassten Information mit der bei ihr bekannten und vorhandenen diesbezüglichen Information versehen ist.

Als sich ständig änderndes Wissen wird demnach bei Authentifikationsverfahren bzw. -systemen, die wie vorher geschildert auch Teil von Signaturverfahren bzw. -systemen sind, der aktuelle geografische Aufenthaltsort der ersten Entität, also eines Nutzers ("Alice") oder eines Geräts, verwendet. Der aktuelle Aufenthaltsort unterliegt einer nutzerabhängigen Dynamik. Der aktuelle Aufenthaltsort ist dem Nutzer in der Regel bekannt oder kann über ein Positionierungsverfahren, z.B. Satellitennavigationssystem Galileo/GPS, Mobilfunk, Indoor, Inertialsystem oder dergleichen, vom Benutzer ermittelt werden.

Zur Verifikation der geographischen Ortsinformation benötigt die andere Entität ("Bob") den Zugriff auf eine Location Registry, in welcher der tatsächliche Aufenthaltsort der zu verifizierenden, ersten Entität hinterlegt ist. Am Beispiel eines auf dem GSM-Mobilfunksystem basierenden Verfahrens gemäß dieser Erfindung kann die erste Entität ("Alice") die Cell-ID der Zelle, in der ihr Endgerät gerade eingebucht ist, als Teil des persönlichen Wissens verwendet werden, um diese Information, vorzugsweise verschlüsselt, an die andere Entität ("Bob") zu senden.

Diese kann beim zuständigen Home Location Register (HLR) des Mobilfunknetzbetreibers der ersten Entität ("Alice") nachfragen, in welcher Zelle sich "Alice" gerade aufhalten sollte. Wenn die übrigen Merkmale des jeweils verwendeten Algorithmus (z.B. "Challenge-and-Response"-Protokoll/Zeitstempel, Hashing oder dergleichen) beibehalten werden, stellt die zusätzliche Verifikation des aktuellen geographischen Aufenthaltsortes eine Erhöhung der Sicherheit des Authentifikationsverfahrens dar, da die erste Entität ("Alice") jedes Mal aufs Neue herausgefordert ist, das sich ändernde Wissen über Ihren eigenen Aufenthaltsort nachzuweisen.

Es ist bei dem Verfahren gemäß der vorliegenden Erfindung nicht zwingend erforderlich, dass die andere Entität ("Bob") zur Verifikation der geographischen Ortsinformation auf Daten eines oder mehrerer Register zurückgreift, bei denen die Position von Entitäten im System hinterlegt ist. Zum einen kann die andere Entität ("Bob") bei periodischen Verifikationen anhand einer Verteilungsfunktion die Plausibilität der Bewegung der ersten Entität ("Alice") überprüfen ("mit Wahrscheinlichkeit x hat sich die erste Entität ["Alice"] um weniger als y Meter seit der letzten Verifikation bewegt" oder "wie weit kann sich die erste Entität ["Alice"] in n Minuten seit Galileo-SAR-Notruf entfernt haben?"). Zum anderen wird erkannt, wenn die erste Entität ("Alice") innerhalb eines gewissen Zeitfensters von zwei oder mehr unterschiedlichen Orten versucht, sich gegenüber der anderen Entität ("Bob") zu authentifizieren, was auch nicht plausibel ist.

Bei Signaturverfahren kann die Authentizität der Unterschrift auf ähnliche Weise in vorteilhafter Weise durch die Berücksichtigung einer Ortsinformation im Unterschrifts- und Verifikationsalgorithmus gestärkt werden. Gleichzeitig wird hierdurch den gesetzlichen Forderungen nach Informationen über den Ort der Unterschriftsleistung als wichtiger Bestandteil von Verträgen und Beurkundungen nachgekommen. Wo und an welcher Stelle die Ortsinformation in den jeweiligen Algorithmus einfließt, hängt vom jeweiligen Algorithmus und von der gewünschten Aussagekraft ab.

Die Ortsinformation kann z.B. vor der Unterschriftsleistung mit dem Dokument konkateniert werden, wodurch beide Informationen zu einer Einheit verschmelzen, da durch die nachfolgende Signatur die Unveränderlichkeit und damit auch die Untrennbarkeit gewährleistet werden. Die Ortsinformation kann aber besser noch als Eingabeschlüssel für eine schlüsselabhängige Hash-Funktion (MAC) verwendet werden. Die meisten der gängigen Signatur- und Verifikationsverfahren wie RSA oder DSS/DSA setzen sowohl bei der Signaturfunktion als auch bei der dazu passenden Verifikationsfunktion bereits schlüsselunabhängige Hash-Funktionen ein.

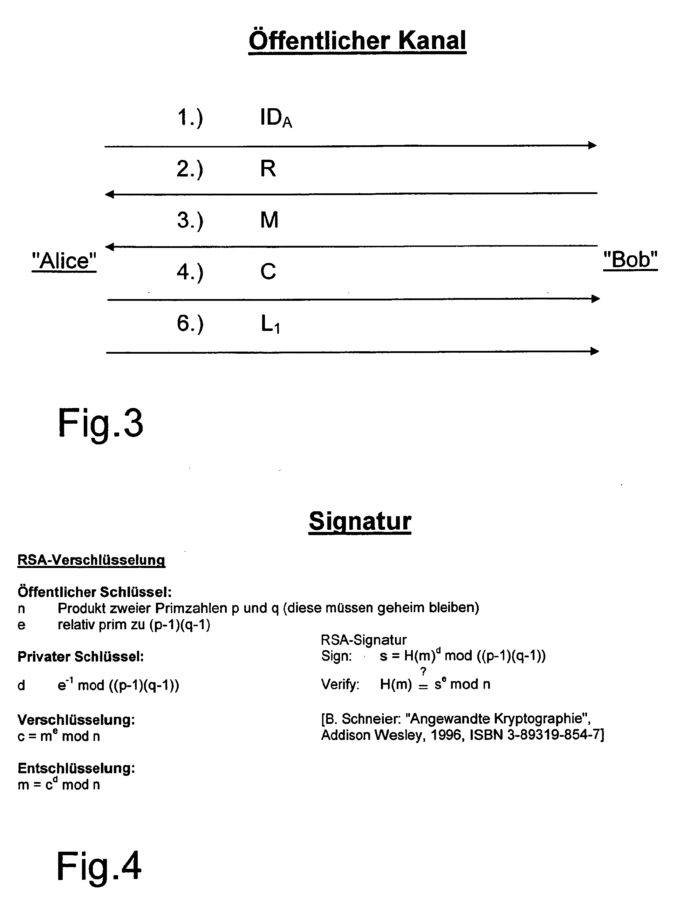

Wenn bei diesen Verfahren die schlüsselunabhängigen Hash-Funktionen durch schlüsselabhängige Hash-Funktionen ersetzt und Informationen über den Ort der Unterzeichnung als Eingabeschlüssel für diese schlüsselabhängigen Hash-Funktionen verwendet werden (siehe Fig.4 zum Thema "Signatur"), sind die zuvor geschilderten positiven Effekte zu erzielen, ohne gleichzeitig das zu unterzeichnende Dokument an sich verändern zu müssen.

Die Verwendung von geographischen Ortsinformationen auf der Basis ständig veränderlichen Wissens in Authentifikations- und Signaturverfahren in der durch die vorliegende Erfindung dargestellten Weise ist neu. Von Bedeutung in diesem Zusammenhang sind insbesondere einzeln oder in Kombination folgende Merkmale und vorteilhafte Weiterbildungen:
- Verknüpfung des geheimen Wissens mit einer geographischen Ortsinformation;
- Verwendung einer mit einem sitzungsabhängigen Schlüssel verschlüsselten geographischen Ortsinformation;
- Verwendung einer geographischen Ortsinformation als Eingabeschlüssel für eine schlüsselabhängige Hash-Funktion (MAC);
- Verwendung einer geographischen Ortsinformation, die von einem globalen Satellitennavigationssystem wie Galileo oder GPS erhalten wurde;
- Verwendung einer geographischen Ortsinformation, die von einem Mobilfunknetz erhalten wurde;
- Verwendung einer geographischen Ortsinformation, die von einem Indoor-Navigationssystem erhalten wurde;
- Übereinstimmung der Ortsinformationen bei Unterschreiten eines Schwellenwertes maximaler geographischer Abweichung ("weiche Übereinstimmung");
- Verwenden weiterer kontextueller Aspekte im analogen Sinn zum Aspekt des geographischen Ortes, z.B. Umgebungstemperatur;
- Verwenden von Pseudoranges, die in einem Zwischenschritt bei der Bestimmung einer Positionsinformation bei einem globalen Satellitennavigationssystem wie Galileo oder GPS berechnet werden;
- Verwenden einer Empfängereinheit eines Positionsbestimmungssystems in Sinne einer Authentifizierung über Eigenschaften ("geographischer Fingerabdruck").

Im Zusammenhang mit den zuletzt aufgeführten Punkten wird darauf hingewiesen, dass bei dem aus DE 199 07 754 A1 bekannten Benutzeridentifikationsverfahren eine Positionsinformation dazu verwendet wird, um die Positionierung eines Fingers auf einem Fingerabdruckleser in Relation zu den erfassten Daten zu setzen. Bei der so erhaltenen Positionsinformation handelt es sich aber um eine Relativposition, nicht um eine geographische Position im Sinne der vorliegenden Erfindung.

Vorteilhafte und zweckmäßige Weiterbildungen des Verfahrens nach der vorliegenden Erfindung sind in den sich unmittelbar oder mittelbar auf den Patentanspruch 1 rückbeziehenden Unteransprüchen angegeben.

Anwendungsgebiete für das Verfahren nach der Erfindung sind vor allem allgemeine Lizenzierungen, Terminalzugänge und Navigationsempfänger in Verbindung mit GPS, Galileo und Mobilfunk.

Die Erfindung wird im Folgenden anhand von Figuren erläutert.

Es zeigen:
- Fig.1: eine Zeichnung "Protokoll" mit einem beispielhaften Ablauf einer geographischen Authentifikation,
- Fig.2: in einer schematischen Darstellung ein Beispiel eines Mobilfunk-Systems mit geographischer Authentifizierung,
- Fig.3: den Ablauf eines geographischen Authentifizierungsverfahrens über einen potentiell unsicheren öffentlichen Kanal,

- Fig.4: eine Zeichnung "Signatur" für ein Signaturverfahren, das mit geographischer Authentifikation unter Anwendung der gängigen Signatur- und Verifikationsverfahren RSA arbeitet, und
- Fig.5: eine Zeichnung "Signatur" für ein Signaturverfahren, das mit geographischer Authentifikation unter Anwendung der gängigen Signatur- und Verifikationsverfahren DSS/DSA arbeitet.

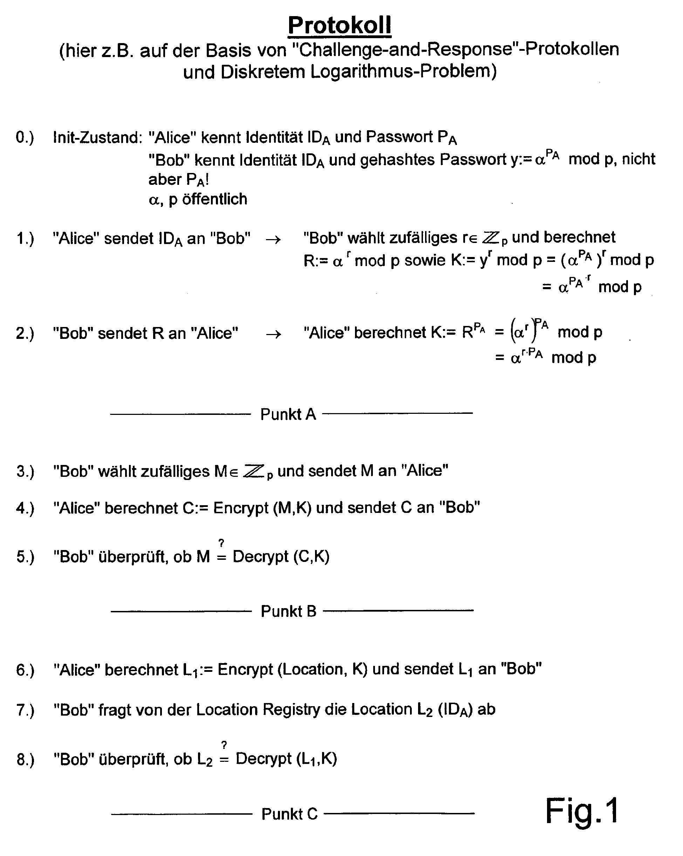

In Fig.1 ist mit der Zeichnung "Protokoll" ein exemplarischer Ablauf einer geographischen Authentifikation dargestellt. Das Beispiel ist eine Variante des "Challenge-and-Response"- Protokolls und basiert auf dem Diskreten Logarithmus-Problem. Wie zum Teil bereits einleitend anhand der Beschreibung des Standes der Technik erläutert wurde, wird bei dieser Art von Verfahren über einen potentiell unsicheren öffentlichen Kanal zunächst ein gemeinsamer Sitzungsschlüssel K ausgehandelt, der aber selbst weder über den Kanal übertragen noch aufgrund der Charakteristik der Einwegfunktionen aus den übertragenen Daten ermittelt werden kann.

Die über den "öffentlichen Kanal" abgewickelten Vorgänge sind in Fig.3 dargestellt. Im Beispiel steht der Sitzungsschlüssel K zum Zeitpunkt A sowohl "Alice" als auch "Bob" zur Verfügung. Die Schritte 3 bis 5 stellen die Verifikation nach dem Stand der Technik dar, d.h. "Alice" weist die Kenntnis der geheimen Information P_{A} nach, ohne die sie den Sitzungsschlüssel K nicht hätte ermitteln können. Encrypt (M,K) bezeichnet dabei eine geeignete Ver- und Decrypt (C,K) die zugehörige Entschlüsselungsfunktion eines Datums M und Schlüssels K. Die Schritte 0 bis 5 stellen hierbei im wesentlichen den Stand der Technik dar.

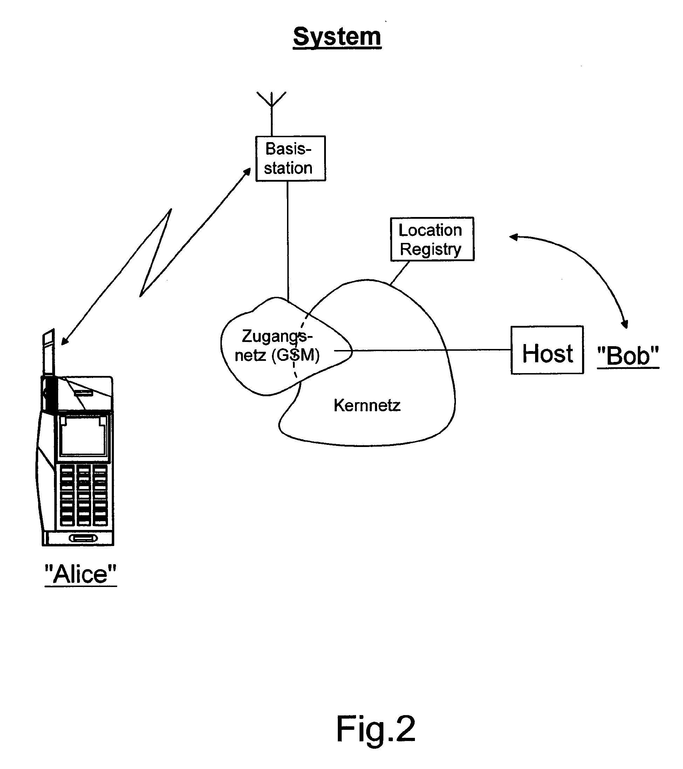

Neu durch die Erfindung hingegen ist die Verwendung des Sitzungsschlüssels K am Punkt B zur verschlüsselten Übermittlung des momentanen Aufenthaltsorts von "Alice", z.B. die am Mobiltelefon in Fig.2 in der Zeichnung "System" verfügbare Cell-ID, an "Bob" zur Verifikation mit Informationen, die "Bob" von einer Location Registry in Schritt 7 erhalten hat.

Die Schritte 6 bis 8 sind zusätzlich durchzuführen und können nicht die Schritte 3 bis 5 ersetzen, da die in Schritt 6 von "Alice" zu verschlüsselnden Daten für "Alice" vorhersehbar und nicht mehr zufällig sind, was das Authentifikationsverfahren insgesamt angreifbar macht, wenn die Schritte 3 bis 5 wegfallen. Nach diesem Verfahren steht erst am Punkt C bei Übereinstimmung der Ortsinformationen bzw. bei Unterschreiten eines Schwellenwertes maximaler Abweichung die Authentizität von "Alice" für "Bob" fest.

Ein Beispiel für die geographische Authentifikation über Eigenschaften ist ein Galileo-Satellitennavigationsempfänger, dessen Pseudorange-Messungen an eine schlüsselabhängige Hash-Funktion (MAC) geleitet werden. Die Hash-Funktion berechnet mit dem Message Digest MD_{Pw} des Passworts den Message Digest MD_{PR} der Pseudorange-Werte, was gemäß der vorliegenden Erfindung als "geographischer Fingerabdruck" der aktuellen geographischen Position des Galileo-Empfängers bezeichnet wird. Dieser geographische Fingerabdruck kann nur von "Alice" mit einem Galileo-Empfänger am aktuellen Aufenthaltsort erzeugt und von "Bob" verifiziert werden, indem er die Ortsinformation von einer Location Registry abfragt und mit der Satelliten-Konstellation für die Region in Bezug bringt.

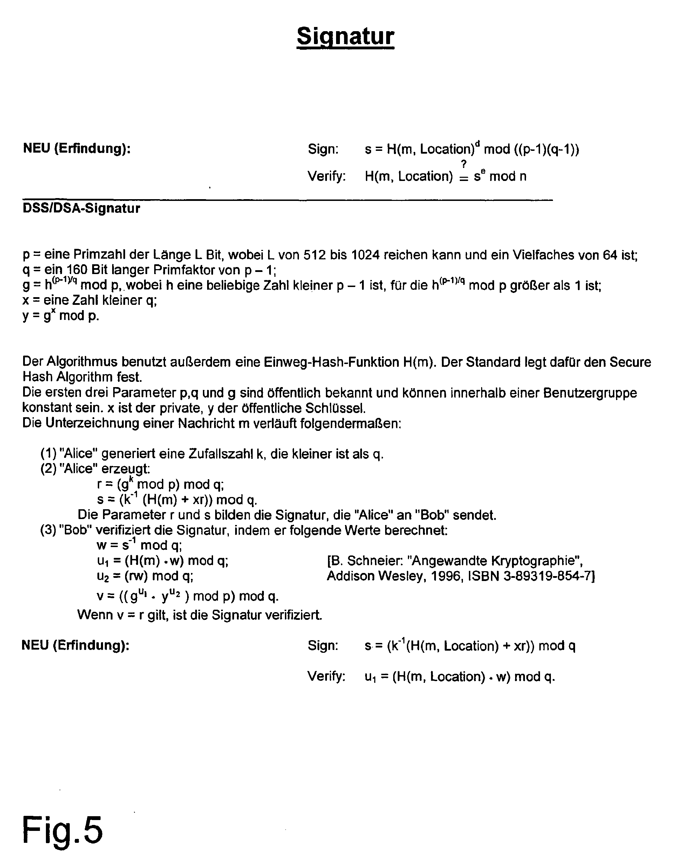

Die Zeichnung "Signatur" in Fig.4 betrifft ein Signaturverfahren, das mit geographischer Authentifikation unter Anwendung der gängigen Signatur- und Verifikationsverfahren RSA arbeitet, während die Zeichnung "Signatur" in Fig.5 ein Signaturverfahren betrifft, das mit geographischer Authentifikation unter Anwendung der gängigen Signatur- und Verifikationsverfahren DSS/DAS arbeitet. Hierbei werden die schlüsselunabhängigen Hash-Funktionen durch schlüsselabhängige Hash-Funktionen ersetzt und Informationen über den Ort der Unterzeichnung als Eingabeschlüssel für diese schlüsselabhängigen Hash-Funktionen verwendet.

Hierdurch werden die geschilderten positiven Sicherheitseffekte, nämlich eine Stärkung der Authentizität der Unterschrift durch Berücksichtigung einer Ortsinformation im Unterschrifts- und Verifikationsalgorithmus sowie die Einhaltung gesetzlicher Forderungen nach Informationen über den Ort der Unterschriftsleistung, erzielt, ohne gleichzeitig das zu unterzeichnende Dokument an sich verändern zu müssen.

## Patentansprüche

1. Verfahren zur Überprüfung der Identität einer ersten Entität, insbesondere eines Nutzers oder Geräts, gegenüber einer anderen Entität in einem System mittels einer im Rahmen eines Authentifikations- oder Signaturverfahrens durchgeführten Authentifizierung durch Wissen als Grundlage für angewandte Algorithmen, wonach die erste Entität als glaubwürdig authentifiziert gilt, wenn sie nachweisen kann, dass sie Kenntnis einer nicht allgemein zugänglichen Information hat und die andere, verifizierende Entität Kenntnis von dieser Information hat und nach Übermittlung dieser Information überprüfen kann, ob die Informationen gültig sind oder nicht, wobei das von der ersten Entität nachzuweisende und von der anderen Entität zu verifizierende Wissen zumindest zum Teil selbst einer ständigen, hochdynamischen und von außen nicht nachvollziehbaren Änderung unterworfen ist, so dass die erste Entität bei jeder Informationsüberprüfung aufs Neue aufgefordert ist, das sich ändernde Wissen nachzuweisen, **dadurch gekennzeichnet, dass** bei der Authentifikation als sich ständig änderndes Wissen eine Information über den aktuellen geographischen Aufenthaltsort der ersten Entität verwendet wird.

2. Verfahren nach Anspruch 1, **dadurch gekennzeichnet, dass** die aktuelle geographische Ortsinformation der ersten Entität mit anderem geheimen Wissen verknüpft wird.

3. Verfahren nach Anspruch 2, **dadurch gekennzeichnet, dass** die aktuelle geographische Ortsinformation der ersten Entität mit einem oder mehreren weiteren kontextuellen Aspekten der ersten Entität, wie z.B. deren Umgebungstemperatur, verknüpft wird.

4. Verfahren nach einem der vorhergehenden Ansprüche, **dadurch gekennzeichnet, dass** eine mit einem sitzungsabhängigen Schlüssel verschlüsselte geographische Ortsinformation verwendet wird.

5. Verfahren nach einem der vorhergehenden Ansprüche, **dadurch gekennzeichnet, dass** die geographische Ortsinformation als Eingabeschlüssel für eine schlüsselabhängige Hash-Funktion verwendet wird.

6. Verfahren nach einem der vorhergehenden Ansprüche, **dadurch gekennzeichnet, dass** die geographische Ortsinformation von einem globalen Satellitennavigationssystem, wie z.B. Galileo oder GPS, erhalten wird.

7. Verfahren nach einem der Ansprüche 1 bis 5, **dadurch gekennzeichnet, dass** die geographische Ortsinformation von einem Mobilfunknetz erhalten wird.

8. Verfahren nach einem der Ansprüche 1 bis 5, **dadurch gekennzeichnet, dass** die geographische Ortsinformation von einem Indoor-Navigationssystem erhalten wird.

9. Verfahren nach einem der vorhergehenden Ansprüche, **dadurch gekennzeichnet, dass** bei der Überprüfung auf Identität der geographischen Ortsinformationen bei Unterschreiten eines Schwellenwertes maximaler geographischer Abweichung auf Übereinstimmung entschieden wird ("weiche Übereinstimmung").

10. Verfahren nach einem der vorhergehenden Ansprüche, **dadurch gekennzeichnet, dass** bei der Überprüfung auf Identität der geographischen Ortsinformationen Pseudoranges verwendet werden, die in einem Zwischenschritt bei der Bestimmung einer Positionsinformation bei einem globalen Satellitennavigationssystem, wie z.B. Galileo oder GPS; berechnet werden.

11. Verfahren nach einem der Ansprüche 1 bis 9, **dadurch gekennzeichnet, dass** bei der Überprüfung auf Identität der geographischen Ortsinformationen eine Empfängereinheit eines Positionsbestimmungssystems im Sinne einer Authentifizierung über Eigenschaften ("geographischer Fingerabdruck") verwendet wird.

12. Verfahren nach Anspruch 1, **dadurch gekennzeichnet, dass** bei Signaturverfahren der Algorithmus der Authentizität der Unterschrift der ersten Entität in einem Dokument durch die Berücksichtigung einer den aktuellen geographischen Aufenthaltsort bzw. Unterzeichnungsort der ersten Entität als veränderliches Wissen enthaltenden Information im Unterschrifts- und Verifikationsalgorithmus verstärkt wird.

13. Verfahren nach Anspruch 12, **dadurch gekennzeichnet, dass** die veränderliche, den Ort der Unterzeichnung enthaltende Information vor der Unterschriftsleistung mit dem Dokument konkateniert wird.

14. Verfahren nach Anspruch 12, **dadurch gekennzeichnet, dass** die veränderliche, den Ort der Unterzeichnung enthaltende Information als Eingabeschlüssel für eine schlüsselabhängige Hash-Funktion verwendet wird und dass bei Signatur- und Verifikationsverfahren wie RSA oder DSS/DSA die schlüsselunabhängigen Hash-Funktionen durch schlüsselabhängige Hash-Funktionen ersetzt werden und die veränderlichen, den Ort der Unterzeichnung enthaltenden Informationen als Eingabeschlüssel für diese schlüsselabhängigen Hash-Funktionen verwendet werden, wobei davon ausgegangen wird, dass die meisten der gängigen Signatur- und Verifikationsverfahren wie RSA oder DSS/DSA sowohl bei der Signaturfunktion als auch bei der dazu passenden Verifikationsfunktion bereits schlüsselunabhängige Hash-Funktionen einsetzen.

15. System zur Durchführung des Verfahrens nach einem der vorhergehenden Ansprüche, **dadurch gekennzeichnet, dass** die erste Entität ("Alice") eine Einrichtung zur Eingabe der nicht allgemein zugänglichen Information enthält, die das sich verändernde Wissen in Gestalt des aktuellen geographischen Aufenthaltsortes der ersten Entität ("Alice") umfasst, dass die andere Entität ("Bob") eine Einrichtung zur Erfassung dieser an sie von der ersten Entität übertragenen oder übergebenen Information aufweist und dass die andere Entität außerdem mit einer Validierungseinrichtung zur Verifizierung und zum Vergleichen der mittels der Einrichtung zur Erfassung erfassten Information mit der bei ihr bekannten und vorhandenen diesbezüglichen Information versehen ist.

16. System nach Anspruch 15, **dadurch gekennzeichnet, dass** in der anderen Entität ("Bob") eine Schwellenwerteinrichtung vorgesehen ist, welche bei Unterschreiten eines Schwellenwertes maximaler geographischer Abweichung auf Übereinstimmung entscheidet ("weiche Übereinstimmung").

17. System nach Anspruch 15 oder 16, **dadurch gekennzeichnet, dass** die erste Entität ("Alice") ein mobiles Kommunikationsendgerät eines Nutzers innerhalb eines zellularen Mobilfunknetzes, z.B. GSM, ist, bei dem die geographischen Ortsinformationen der mit ihrem Kommunikationsendgerät einbuchbaren Nutzer durch die Basisstationspositionen in Form einer Zellenidentifikation (Cell-ID) erhalten werden, und dass die andere Entität ("Bob") zur Verifikation Zugriff auf die Ortsinformationen bezüglich der aktuellen Aufenthaltsorte der Nutzer des Mobilfunknetzes über eine zuständige Home Location Registry hat, in welcher in Form der Zellenidentifikation (Cell-ID) der tatsächliche aktuelle geographische Aufenthaltsort der zu verifizierenden, ersten Entität hinterlegt ist.

18. System nach einem der Ansprüche 15 bis 17, **dadurch gekennzeichnet, dass** die übrigen Merkmale, z.B. Challenge-and-Response/Zeitstempel, Hashing, des jeweils verwendeten Algorithmus beibehalten sind.

19. System nach Anspruch 15, **dadurch gekennzeichnet, dass** bei Anwendung in Verbindung mit einem Signaturverfahren in der ersten Entität eine Einrichtung zum Hinzufügen einer vorzugsweise verschlüsselten aktuellen Ortsinformation in den jeweils eingesetzten Unterschrifts- und Verifikationsalgorithmus des an die andere Entität zu übergebenden Dokuments vorgesehen ist und dass die andere Entität eine Einrichtung zur Überprüfung der Authentizität einschließlich der Ortsinformation des übergebenen Dokuments aufweist.
